# EUROPÄISCHE PATENTSCHRIFT

(11) **EP 0 616 985 B1**
(45) Veröffentlichungstag und Bekanntmachung des Hinweises auf die Patenterteilung: **10.11.1999**
(21) Anmeldenummer: 94810140.7
(22) Anmeldetag: 04.03.1994
(51) Int. Cl.: C04B 26/02, C04B 14/30, C09K 21/02, B32B 15/08

(54) **Verbundplatten mit zwei Deckschichten und einem Kern**
Composite panel comprising two outer layers and a core
Panneau composite avec deux couches et une âme

(30) Priorität: 26.03.1993 CH 93793
(43) Veröffentlichungstag der Anmeldung: 28.09.1994
(73) Patentinhaber: Alusuisse Technology & Management AG, 8212 Neuhausen am Rheinfall (CH)
(72) Erfinder: Ehrat, Rainer, CH-8207 Schaffhausen (CH); Bregenzer, René, CH-8212 Neuhausen (CH)

(56) Entgegenhaltungen:
- EP-A- 0 026 262
- EP-A- 0 423 074
- DE-A- 2 700 852
- DE-A- 3 904 972
- GB-A- 2 029 319
- CHEMICAL ABSTRACTS, vol. 103, no. 4, 29.Juli 1985 Columbus, Ohio, US; abstract no. 26357s,

## Beschreibung

Vorliegende Erfindung betrifft Verbundplatten mit zwei Deckschichten und einem Kern, wobei der Kern eine Kernmischung aufweist, welche eine Mischung eines Füllmaterials und Bindemittel enthält, und die Verwendung solcher Verbundplatten.

Verbundplatten aus zwei Deckblechen und einem Kern, welcher aus einer Mischung eines körnigen Füllmaterials und einem Bindemittel besteht, sind aus der DE-PS 28 42 858 bekannt. Es wurde beschrieben, dass das Kernmaterial wenigstens 42,5 Gew.-% Al(OH)3 enthalten müsse und dass als Bindemittel flüssige, organische Reaktionsharzgemische, d.h. im wesentlichen Duroplaste, verwendet werden müssen.

Solche Verbundplatten vermögen nicht allen Anforderungen gerecht zu werden, da deren Verarbeitbarkeit, bedingt durch die Sprödigkeit der Bindemittel beschränkt ist. Insbesondere die Biegbarkeit von bekannten Verbundplatten, beispielsweise bei der Verarbeitung zu Struktur- und Fassadenelementen, ist begrenzt.

Aufgabe vorliegender Erfindung ist es biegbare, Verbundplatten vorzuschlagen, die leicht verarbeitbar und insbesondere geformt, wie gebogen oder geknickt werden können und dabei den Erfordernissen der Klassierung zu unbrennbaren Baustoffen bzw. Bauteilen entsprechen.

Erfindungsgemäss wird das mit einer Kernmischung erreicht, die
a) 35 bis 60 Gew.-% Aluminiumhydroxid in kompaktierter Form mit einer mittleren Korngrösse von 0,3 bis 1,0 mm,
b) 15 bis 25 Gew.-% Leichtfüllstoffe mit einem mittleren Durchmesser von 5 bis 1500 µm,
c) 12 bis 25 Gew.-% feinkörniges oder splittriges Aluminiumhydroxid in einer mittleren Korngrösse von 10 bis 30 µm,
d) 0 bis 20 Gew.-% Magnesiumhydroxid in einer mittleren Korngrösse von 10 bis 50 µm oder 0 bis 20 Gew.-% Magnesiumhydroxid mit einer mittleren Korngrösse von 0,3 bis 1,0 mm,
e) 4 bis 10 Gew.-% Bindemittel auf Basis von Polymeren, die an sich ein E-Modul von 90 - 140 MPa und eine Bruchdehnung von 400 - 800 % aufweisen
   und
f) organische oder anorganische Fasern in Mengen bis zu 3 Gew.-% enthält.

Bevorzugt sind Verbundplatten nach vorliegender Erfindung, deren Kernmischung:
a) 40 bis 55 Gew.-% Aluminiumhydroxid in kompaktierter Form mit einer mittleren Korngrösse von 0,3 bis 1,0 mm,
b) 20 bis 25 Gew.-% Leichtfüllstoffe mit einem mittleren Durchmesser von 5 bis 1500 µm,
c) 12 bis 20 Gew.-% feinkörniges oder splittriges Aluminiumhydroxid in einer mittleren Korngrösse von 10 bis 30 µm,
d) 0 bis 20 Gew.-% Magnesiumhydroxid in einer mittleren Korngrösse von 10 bis 50 µm und
e) 6 bis 10 Gew.-% Bindemittel auf Basis von Polymeren, die an sich ein E-Modul von 90 - 140 MPa und ein Bruchdehnung von 400 - 800 % aufweisen, enthält.

Besonders bevorzugt sind Verbundplatten nach vorliegender Erfindung, besonderen Kernmischung:
a) 35 bis 55 Gew.-% Aluminiumhydroxid in kompaktierter Form mit einer mittleren Korngrösse von 0,3 bis 1,0 mm,
b) 20 bis 25 Gew.-% Leichtfüllstoff mit einem mittleren Durchmesser von 100 bis 300 µm,
c) 14 bis 17 Gew.-% feinkörniges oder splittriges Aluminiumhydroxid in einer mittleren Korngrösse von 10 bis 30 µm,
d) 14 bis 16 Gew.-% Magnesiumhydroxid in einer mittleren Korngrösse von 10 bis 50 µm und
e) 7 bis 9 Gew.-% Bindemittel auf Basis von Polymeren, die an sich ein E-Modul von 90 - 140 MPa und ein Bruchdehnung von 400 - 800 % aufweisen, enthält.

Die Prozentangaben sind jeweils auf die gesamte Kernmischung als 100 Gew.-% bezogen.

Verbundplatten nach vorliegender Erfindung weisen zwei Deckschichten aus folien-, band- oder plattenförmigem Material auf. Solche Materialien können Kunststoffe, wie z.B. Polyvinylchlorid, Polyolefine, Polyamide, Polyester, faserverstärkte Kunstharze und dergleichen, beispielsweise in einer Dicke von 0,1 bis 5 mm sein. Bevorzugt werden metallische Materialien, wie Eisen- oder Nichteisenmetalle, insbesondere der Reihen des Eisens, Stahls, Zinks, Zinns, verzinkten Eisens, Kupfers, der Bronze, der Buntmetalle, des Aluminiums oder der Aluminiumlegierungen. Besonders bevorzugt sind Aluminium und Aluminiumlegierungen. Üblicherweise ist die Dicke der Deckschichten zwischen 0,1 und 3 mm, zweckmässig zwischen 0,3 und 2 mm und vorzugsweise zwischen 0,5 und 1,25 mm, für Aluminium- und Aluminiumlegierungsdeckschichten. Es können beide Deckschichten aus dem gleichen Material und in gleicher Dicke sein. Es ist auch möglich, die beiden Deckschichten aus verschiedenen Materialien zu wählen. Die Dicken der beiden Deckschichten können gleich oder verschieden sein.

Beispielsweise kann die eine Deckschicht aus Metall, die andere Deckschicht aus Kunststoff sein.

Der Kunststoff von Deckschichten kann durch Flammhemmittel feuerfest gemacht sein. Der Kunststoff kann auch verstärkt z.B. durch Fasern oder z.B. geschäumt sein.

Der Kern kann aus der Kernmischung bestehen oder der Kern kann aus mehreren Schichten gleicher oder verschiedener Kernmischungen bestehen, wobei die Schichten gegebenenfalls durch eine oder mehrere Lagen von flächigen Werkstoffen, wie Metallfolien, -bändern oder -platten, Papieren, Pappen, Kunststoffolien und/oder Kunststoff-Platten voneinander getrennt sein können.

Beispielsweise sind Verbunde aus zwei Deckschichten und dazwischen einem Kern, der aus einer Metallfolie, wie z.B. einer Aluminiumfolie, und beidseitig der Folie je einer Schicht aus Kernmischung besteht, möglich.

Die Deckschichten können mit dem Kernmaterial beispielsweise nach dem Verfahren gemäss der EP-A 0 423 074 miteinander verbunden werden. Falls die Kernmischung bei den gegebenen Bedingungen genügend Haftkraft aufweist, kann die Kernmischung direkt mit den Deckschichten verbunden werden. Zwischen den Deckschichten und dem Kernmaterial können zum trennfesten Verbinden auch Klebstoffe oder Haftvermittler oder andere Klebehilfen, wie Klebebänder, vorgesehen werden. Sinngemäss gilt dies auch für andere Kernaufbauten, die aus zwei oder mehreren Kernschichten und gegebenenfalls flächigen Materialien dazwischen, aufgebaut sind.

Bei dem erfindungsgemäss verwendeten Aluminiumhydroxid mit einer mittleren Korngrösse von 0,3 - 1 mm handelt es sich in der Praxis um kompaktierte oder granulierte Typen. Sie werden in der Regel durch Mahlen, respektive Sichten, in die angegebene Korngrösse zerlegt. Die minimale Korngrösse kann beispielsweise 0,2 mm, die maximale Korngrösse 1,5 mm betragen. Es kann sich dabei um technische Aluminiumhydroxide, die etwa zu 99,5 Gew.-% aus Al(OH)₃ bestehen, handeln. Beim Rest handelt es sich um verarbeitungstypische Verunreinigungen.

Das verwendete feinkörnige oder splittrige Aluminiumhydroxid in einer mittleren Korngrösse von 10 bis 30 µm weist eine minimale Korngrösse von beispielsweise 5 µm auf und eine maximale Korngrösse von 50 µm auf. Derart feinteiliges Aluminiumhydroxid kann beispielsweise durch besondere Impfverfahren innerhalb des Bayer-Prozesses hergestellt werden oder aus gekühlten stark verdünnten Aluminatlaugen ausgefällt werden.

Beim Erhitzen von über 200°C spaltet Aluminiumhydroxid endoterm Wasser ab nach der Formel 2Al(OH)₃ → Al₂O₃ + 3H₂O.

Die Reaktionsenthalpie bei 700K beträgt 250kJ/kg, weswegen die Aluminiumhydroxide flammwidrig wirken. Die Zersetzung von Al(OH)₃ verbraucht Wärme und der entstandene Wasserdampf erschwert den Zutritt von Sauerstoff.

Leichtfüllstoffe sind beispielsweise Lavaschlacken, Bims, Zuschläge von Ton, Tonschiefer, Flugasche, Müll, die z.B. nass zu Granalien verarbeitet und durch Verdampfen des Wassers gebläht werden, Blähton, Hohlkugelkorund, Steinkohlenschlacke, Ziegelsplitt, Vermiculite, Perlite, Blähglimmer, Blähperlit, Kieselgur, Schaumsand, Schaumkies usw.

Zweckmässig weisen die Leichtfüllstoffe eine Teilchengrösse von 5 bis 1500 µm, bevorzugt von 200 µm und kleiner und insbesondere von 100 bis 300 µm, resp. 100 bis 200 µm auf.

Besonders bevorzugt als Leichtfüllstoff sind Glashohlkugeln und Schaumglas. Glashohlkugeln und Schaumglas können beispielsweise aus boroxid-, aluminiumoxid-, natriumoxid- oder bleioxidhaltigen Silicatgläsern hergestellt werden, wobei Aluminiumsilicat-Glashohlkugeln bevorzugt sind. Die Dichte von Glashohlkugeln kann beispielsweise von 0,4 bis 0,9 g/cm³ betragen (Schüttdichte).

Besonders bevorzugte Leichtfüllstoffe sind Glashohlkugeln, z.B. aus aluminiumoxidhaltigen Silikatgläsern in einer Grösse von 5 bis 500 um und einem mittlerem Durchmesser von 100 bis 300 µm.

Die Leichtfüllstoffe werden zweckmässig in Mengen von 20 bis 25 Gew.-% in der Kernmischung angewendet.

Die Kernmischung in Verbunden nach vorliegender Erfindung enthält 4 bis 10 Gew.% eines Bindemittels auf Basis von Polymeren, die an sich ein E-Modul von 90 - 140 MPa und ein Bruchdehnung von 400 - 800 % aufweisen.

Bevorzugt sind Kernmischungen enthaltend 6 bis 10 Gew.-% und insbesondere 7 bis 9 Gew.-% Bindemittel. Als Bindemittel können beispielsweise Polymere, Polymer-Mischungen, Homopolymere oder Copolymere, zweckmässig thermoplastische Kunststoffe, auf Basis von Polyolefinen, angewendet werden.

Beispiele für thermoplastische Kunststoffe auf Basis von Polyolefinen sind Polyethylene, z.B. Polyethylen hoher Dichte (HDPE, Dichte grösser als 0,944g/cm³), Polyethylen mittlerer Dichte (MDPE, Dichte 0,926-0,940 g/cm³), lineares Polyethylen mittlerer Dichte (LMDPE, Dichte 0,926-0,940 g/cm³), Polyethylen niedriger Dichte (LDPE, Dichte 0,910-0,925 g/cm³) und lineares Polyethylen niedriger Dichte (LLDPE, Dichte 0,916-0,925 g/cm³), Polypropylen, ataktisches, isotaktisches, amorphes und kristallines Polypropylen, sowie beliebige Mischungen davon, Poly-1-buten, Poly-3-methylbuten, Poly-4-methyl-penten und Copolymere davon, wie z.B. von Polyethylen mit Vinylacetat, Vinylacetat und Acrylestern, Vinylalkohol, Acrylsäure, z.B. Ionomerharze, wie Copolymerisate von Ethylen mit etwa 11 % Acrylsäure, Methacrylsäure, Maleinsäure, Acrylsäureestern, Maleinestern, Methacrylestern, Tetrafluorethylen oder Polypropylen, sowie Mischungen, statistische Copolymere, Block-Copolymere oder Olefinpolymer-Elastomer-Mischungen davon. Polyethylene und Polyethylen-Copolymere werden bevorzugt.

Zweckmässige Kernmischungen enthalten 6 bis 10 Gew.-% eines vorwiegend polyethylenhaltigen Bindemittels.

Besonders zweckmässig sind als Bindemittel thermoplastische Kunststoffe auf Basis von Polyolefinen, die sich als Ausgangsstoffe in Pulver- oder Granulatform in einer Korngrösse von 10 bis 30 µm vorliegen. Von den thermoplastischen Kunststoffen in dieser Korngrösse sind wiederum die Polyethylen-Copolymere mit Heteropolymeren, wie z.B. Ethylen, Pfropfpolymerisate mit 5 bis 25 % Acrylsäure oder Acrylsäureester und Maleinsäure oder Maleinsäureester besonders bevorzugt.

Die Kernmischungen können noch weitere Hilfsmittel enthalten. Bevorzugt sind Kernmischungen enthaltend Rauchverminderer.

Als Rauchverminderer können beispielhaft das Zinkchlorat Zn(BO₂)₂ • 2H₂O oder 2ZnO•(B₂O₃)₃•(H₂O)_{3·5} oder Wirkstoffe der Reihe der Metallocene, insbesondere Ferrocene, oder der Reihe der Metallacetylacetonate, genannt werden. Der Rauchverminderer kann insbesondere in feinpulveriger Form, z.B. in einer Korngrösse von 30 bis 80 µm angewendet werden.

Die Rauchverminderer können in Mengen von z.B. bis zu 0,5 Gew.-%, und zweckmässig 0,1 bis 0,5 Gew.-%, bezogen auf die Kernmischung, angewendet werden.

Die Kernmischung kann nach vorliegender Erfindung auch organische oder anorganische Fasern in Mengen von z.B. bis zu 3 Gew.-% und zweckmässig von 0,1 bis 0,3 Gew.-% enthalten. Beispiele solcher Fasern sind zellulosehaltige Fasern, wie Baumwoll- oder Rayonfasern, Wollfasern, Polyamid-, Polyolefin- oder Polyesterfasern, Kohlenstoffasern und bevorzugt werden anorganische Fasern, wie Glas-, Glaskeramik-, Gesteins-, Schlacken-, Kohlenstoff-, Bor- oder Metallfasern. Bevorzugt werden Glas-, Glaskeramik- und Gesteinsfasern. Beispielsweise können die Fasern eine Länge von 3 bis 4 mm aufweisen und der Durchmesser kann von 5 bis 50 um betragen.

Die Kernmischung kann z.B. durch Vermischen der verschiedenen Bestandteile, z.B. trockenes Vermischen in einem Feststoffmischer, wie einem Zwangsmischer, Schneckenmischer, Taumelmischer oder Fluidmischer oder anderen kontinuierlich oder diskontinuierlich arbeitenden Mischern, hergestellt werden.

Bei der Herstellung von biegbaren Verbundplatten gemäss vorliegender Erfindung, mit zwei Deckschichten und einem Kern, wobei der Kern eine Kernmischung aufweist, welche eine Mischung eines Füllmaterials und Bindemittel enthält, kann die Kernmischung durch Mischen der einzelnen Bestandteile vorbereitet werden, wobei das Bindemittel auf Basis von Polymeren, die an sich ein E-Modul von 90 - 140 MPa und ein Bruchdehnung von 400 - 800 % aufweisen, bevorzugt auf Basis eines Polyolefins, in einer mittleren Korngrösse von 10 bis 30 um angewendet wird.

Die weitere Verarbeitung der Kernmischung und der Deckschichten zu Verbundplatten kann beispielsweise nach einem Verfahren, wie in der EP-A 0 087 546 oder EP-A 0 423 074 beschrieben, erfolgen.

Die Verbundplatten nach vorliegender Erfindung können beispielsweise nach den oben genannten Verfahren, insbesondere durch Anwendung von Drücken von 1 bis 50 bar, zweckmässig von 5 bis 25 bar, und gleichzeitig Temperaturen von 120 bis 250 °C, zweckmässig bis 220 °C, insbesondere bei der Anwendung einer Bandpresse, hergestellt werden. Die Deckschichten werden dabei, gegebenenfalls mit Klebehilfen, wie Klebefolien, trennfest mit der Kernschicht verbunden und die Kernmischung verfestigt sich bei der Druck- und Hitzeeinwirkung. Die derart herstellbaren Verbundplatten können nach Massgabe des Bedürfnisses verarbeitet, z.B. auf die gewünschte Grösse abgelängt werden, z.B. durch Sägen, Fräsen oder Schneiden oder durch z.B. Bohren oder Schneiden mit Ausnehmungen versehen werden. Es ist auch möglich, die Verbundplatten zu verformen, beispielsweise zu biegen oder zu knicken. Dabei ist es hilfreich, wenn eine der Deckschichten , insbesondere auf der Innenseite des Biegeradius mit einer oder mehreren Kerben oder Schnitten versehen wird. Die Kerben oder Schnitte können sich bis in den Kern hinein fortsetzen.

Beim Biegen vermag der mit thermoplastischen Kunststoffen gebundene Kern die Biegebewegung aufzunehmen und die Aussenseite der Verbundplatte erfährt, gestützt durch den Kern oder Kernrest, eine saubere Biegelinie.

Vorliegende Erfindung betrifft auch die Verwendung der erfindungsgemässen Verbundplatten als biegbare Baumaterialien, wie Fassadenplatten, Verkleidungen von Hochbauten, Trennwände in Gebäuden, im Fahrzeug- und Schiffsbau und im Apparate- und Maschinenbau.

Die erfindungsgemässen Verbundplatten zeichnen sich durch eine ausserordentliche Feuerfestigkeit und Hitzebeständigkeit aus. Auch im Brandfalle entwickeln die Platten, nur geringe Mengen an Verbrennungsgasen. Diese Verbrennungsgase sind weitgehend unschädlich, da die verwendeten Polyolefine zu CO₂ und Wasser abbrennen und aus den anorganischen Bestandteilen höchstens Wasser abgeschieden wird. Die erfindungsgemässen Verbundplatten erfüllen z.B. die Anforderungen von DIN 4102 Klassifikation A2 (Brandschutznorm).

Alle Angaben in Prozenten oder Teilen beziehen sich auf das Gewicht, sofern nicht anders angegeben.

### Beispiel 1

Es wird eine Charge hergestellt, enthaltend 22,4 Gew.-% Glashohlkugeln, 54,2 Gew.-% kompaktiertes Aluminiumhydroxid, 15,6 Gew.-% feinkörniges Aluminiumhydroxid, 7,6 Gew.-% Bindemittel und 0,2 Gew.-% Rauchverminderer. Dabei werden die Einzelbestandteile in einen Mischer gegeben und während einer Minute gemischt. Auf eine untere Deckschicht wird die obige Mischung in einer 5,3 mm dicken Schicht aufgebracht und mit einer oberen Deckschicht belegt. Die untere und obere Deckschicht bestehen aus Aluminiumblech, resp. Band einer Dicke von 0,5 mm. In einer Presse wird aus den drei Schichten ein Verbund bei einem Druck von 20•10⁵ Pa, bei einer Temperatur von 190°C und einer Verweilzeit von 1 Min. zu einer Verbundplatte gepresst. Die resultierende Verbundplatte hat eine Kerndichte von 1,45 g/cm³ und eine Kerndicke von 3,0 mm.

### Beispiel 2

Es wird wie in Beispiel 1 verfahren. Es werden jedoch folgende Bestandteile für die Kernmischung verwendet:
22,4 % Glashohlkugeln
39,2 % kompaktiertes Aluminiumhydroxid
15,6 % feinkörniges Aluminiumhydroxid
15,2 % Magnesiumhydroxid
7,6 % Bindemittel

### Beispiel 3

Es wird wie in Beispiel 1 verfahren, jedoch werden folgende Bestandteile für die Kernmischung verwendet:
22,4 % Glashohlkugeln
39,0 % kompaktiertes Aluminiumhydroxid
15,6 % feinkörniges Aluminiumhydroxid
15,2 % Magnesiumhydroxid
7,6 % Bindemittel
0,2 % Fasern

### Beispiel 4

Es wird wie in Beispiel 1 verfahren, jedoch werden folgende Bestandteile für die Kernmischung verwendet:
22,4 % Glashohlkugeln
54,0 % kompaktiertes Aluminiumhydroxid
15,6 % feinkörniges Aluminiumhydroxid
7,6 % Bindemittel
0,2 % Rauchverminderer
0,2 % Fasern

In allen Beispielen werden als Glashohlkugeln aus Aluminiumsilicatglas mit einem mittleren Durchmesser von 100 µm verwendet, das kompaktierte Aluminiumhydroxid hat einen Korndurchmesser von 0,5 bis 1,0 µm, das feinkörnige Aluminiumhydroxid hat einen Korndurchmesser von 25 bis 50 µm, das Magnesiumhydroxid hat einen mittleren Korndurchmesser von 25 bis 50 µm, als Bindemittel wird ein überwiegend Polyethylen enthaltendes Terpolymer, als Rauchverminderer ein Ferrocen und als Fasern 3 mm Glasfasern angewendet.

## Patentansprüche

1. Biegbare Verbundplatten mit zwei Deckschichten und einem Kern, wobei der Kern eine Kernmischung aufweist, welche eine Mischung eines Füllmaterials mit Aluminiumhydroxid und ein organisches Bindemittel auf Basis von Polymeren enthält,
dadurch gekennzeichnet,
dass die Kernmischung:
a) 35 bis 60 Gew.-% Aluminiumhydroxid in kompaktierter Form mit einer mittleren Korngrösse von 0,3 bis 1,0 mm,
b) 15 bis 25 Gew.-% Leichtfüllstoffe mit einem mittleren Durchmesser von 5 bis 1500 µm,
c) 12 bis 25 Gew.-% feinkörniges oder splittriges Aluminiumhydroxid in einer mittleren Korngrösse von 10 bis 30 µm,
d) 0 bis 20 Gew.-% Magnesiumhydroxid in einer mittleren Korngrösse von 10 bis 50 µm oder 0 bis 20 Gew.-% Magnesiumhydroxid mit einer mittleren Korngrösse von 0,3 bis 1,0 mm,
e) 4 bis 10 Gew.-% Bindemittel auf Basis von Polymeren, die an sich ein E-Modul von 90 - 140 MPa und eine Bruchdehnung von 400 - 800 % aufweisen
und
f) organische oder anorganische Fasern in Mengen bis zu 3 Gew.-%, enthält.

2. Verbundplatten nach Anspruch 1, dadurch gekennzeichnet, dass die Kernmischung
a) 40 bis 55 Gew.-% Aluminiumhydroxid in kompaktierter Form mit einer mittleren Korngrösse von 0,3 bis 1,0 mm,
b) 20 bis 25 Gew.-% Leichtfüllstoffe mit einem mittleren Durchmesser von 5 bis 1500 µm,
c) 12 bis 20 Gew.-% feinkörniges oder splittriges Aluminiumhydroxid in einer mittleren Korngrösse von 10 bis 30 µm,
d) 0 bis 20 Gew.-% Magnesiumhydroxid in einer mittleren Korngrösse von 10 bis 50 µm und
e) 6 bis 10 Gew.-% Bindemittel auf Basis von Polymeren, die an sich ein E-Modul von 90 - 140 MPa und ein Bruchdehnung von 400 - 800 % aufweisen, enthält.

3. Verbundplatten nach Anspruch 1, dadurch gekennzeichnet, dass die Kernmischung
a) 35 bis 55 Gew.-% Aluminiumhydroxid in kompaktierter Form mit einer mittleren Korngrösse von 0,3 bis 1,0 mm,
b) 20 bis 25 Gew.-% Leichtfüllstoff mit einem mittleren Durchmesser von 100 bis 300 µm,
c) 14 bis 17 Gew.-% feinkörniges oder splittriges Aluminiumhydroxid in einer mittleren Korngrösse von 10 bis 30 µm,
d) 14 bis 16 Gew.-% Magnesiumhydroxid in einer mittleren Korngrösse von 10 bis 50 µm und
e) 7 bis 9 Gew.-% Bindemittel auf Basis von Polymeren, die an sich ein E-Modul von 90 - 140 MPa und ein Bruchdehnung von 400 - 800 % aufweisen, enthält.

4. Verbundplatten nach Anspruch 1, dadurch gekennzeichnet, dass die Kernmischung als Leichtfüllstoff Glashohlkugeln enthält.

5. Verbundplatten nach Anspruch 1, dadurch gekennzeichnet, dass die Kernmischung bis zu 0,5 Gew.-%, bezogen auf die Kernmischung, Rauchverminderer enthält.

6. Verbundplatten nach Anspruch 1, dadurch gekennzeichnet, dass die Kernmischung als Bindemittel 6 bis 10 Gew.-% polyethylenhaltiges Bindemittel enthält.

7. Verbundplatten nach Anspruch 1, dadurch gekennzeichnet, dass die Kernmischung 12 bis 20 Gew.-% feinkörniges oder splittriges Aluminiumhydroxid in einer mittleren Korngrösse von 10 bis 30 µm enthält.

8. Verwendung der Verbundplatten nach Anspruch 1 als biegbare Baumaterialien, Fassadenplatten, Verkleidungen von Hochbauten, Trennwände in Gebäuden, im Fahrzeug- und Schiffsbau und im Apparate- und Maschinenbau.

9. Verfahren zur Herstellung von biegbaren Verbundplatten nach Anspruch 1 mit zwei Deckschichten und einem Kern, wobei der Kern eine Kernmischung aufweist, welche eine Mischung eines Füllmaterials mit Aluminiumhydroxid und eines organischen Bindemittels auf Basis von Polymeren enthält, dadurch gekennzeichnet, dass die Kernmischung durch Mischen der einzelnen Bestandteile vorbereitet wird, wobei das Bindemittel auf Basis von Polymeren, die an sich ein E-Modul von 90 - 140 MPa und eine Bruchdehnung von 400 - 800 % aufweisen, und bevorzugt auf Basis eines Polyolefins, in einer mittleren Korngrösse von 10 bis 30 µm angewendet wird.

## Claims

1. Flexible composite panels comprising two outer layers and a core, the core having a core mixture containing a mixture of a filler with aluminium hydroxide and an organic binder based on polymers, characterised in that the core mixture contains:
a) 35 to 60 % by weight of aluminium hydroxide in compacted form with an average particle size of 0.3 to 1.0 mm,
b) 15 to 25 % by weight of lightweight fillers with an average diameter of 5 to 1500 µm,
c) 12 to 25 % by weight of fine-particle or splintered aluminium hydroxide with an average particle size of 10 to 30 µm,
d) 0 to 20 % by weight of magnesium hydroxide with an average particle size of 10 to 50 µm or 0 to 20 % by weight of magnesium hydroxide with an average particle size of 0.3 to 1.0 mm,
e) 4 to 10 % by weight of a binder based on polymers in themselves having a modulus of elasticity of 90-140 MPa and an elongation at break of 400-800 %, and
f) organic or inorganic fibres in quantities of up to 3 % by weight.

2. Composite panels according to claim 1, characterised in that the core mixture contains
a) 40 to 55 % by weight of aluminium hydroxide in compacted form with an average particle size of 0.3 to 1.0 mm,
b) 20 to 25 % by weight of lightweight fillers with an average diameter of 5 to 1500 µm,
c) 12 to 20 % by weight of fine-particle or splintered aluminium hydroxide with an average particle size of 10 to 30 µm,
d) 0 to 20 % by weight of magnesium hydroxide with an average particle size of 10 to 50 µm, and
e) 6 to 10 % by weight of a binder based on polymers in themselves having a modulus of elasticity of 90-140 MPa and an elongation at break of 400-800 %.

3. Composite panels according to claim 1, characterised in that the core mixture contains
a) 35 to 55 % by weight of aluminium hydroxide in compacted form with an average particle size of 0.3 to 1.0 mm,
b) 20 to 25 % by weight of lightweight fillers with an average diameter of 100 to 300 µm,
c) 14 to 17 % by weight of fine-particle or splintered aluminium hydroxide with an average particle size of 10 to 30 µm,
d) 14 to 16 % by weight of magnesium hydroxide with an average particle size of 10 to 50 µm, and
e) 7 to 9 % by weight of a binder based on polymers in themselves having a modulus of elasticity of 90-140 MPa and an elongation at break of 400-800 %.

4. Composite panels according to claim 1, characterised in that the core mixture contains hollow glass beads as the lightweight filler.

5. Composite panels according to claim 1, characterised in that the core mixture contains up to 0.5 % by weight of smoke reducers, in relation to the core mixture.

6. Composite panels according to claim 1, characterised in that the core mixture contains 6 to 10 % by weight of a polyethylene-containing binder as the binder.

7. Composite panels according to claim 1, characterised in that the core mixture contains 12 to 20 % by weight of fine-particle or splintered aluminium hydroxide with an average particle size of 10 to 30 µm.

8. Use of the composite panels according to claim 1 as flexible building materials, facade panels, claddings for high buildings, partition walls in buildings, in vehicle construction and shipbuilding and in machine and equipment manufacture.

9. Process for the production of flexible composite panels according to claim 1, comprising two outer layers and a core, the core having a core mixture containing a mixture of a filler with aluminium hydroxide and an organic binder based on polymers, characterised in that the core mixture is prepared by mixing the individual ingredients, the binder based on polymers in themselves having a modulus of elasticity of 90-140 MPa and an elongation at break of 400-800 %, and preferably based on a polyolefin, being used with an average particle size of 10 to 30 µm.

## Revendications

1. Panneaux composites flexibles comprenant deux couches de recouvrement et une partie centrale, la partie centrale présentant un mélange de partie centrale qui contient un mélange d'une matière de charge avec de l'hydroxyde d'aluminium et d'un liant organique à base de polymères,
caractérisés en ce que
le mélange de partie centrale contient:
a) à concurrence de 35 à 60% en poids, de l'hydroxyde d'aluminium sous forme comprimée possédant une granulométrie moyenne de 0,3 à 1,0 mm,
b) à concurrence de 15 à 25% en poids, des matières de charge légères possédant un diamètre moyen de 5 à 1500 µm,
c) à concurrence de 12 à 25% en poids, de l'hydroxyde d'aluminium à grains fins ou en éclats possédant une granulométrie moyenne de 10 à 30 µm,
d) à concurrence de 0 à 20% en poids, de l'hydroxyde de magnésium possédant une granulométrie moyenne de 10 à 50 µm ou, à concurrence de 0 à 20% en poids, de l'hydroxyde de magnésium possédant une granulométrie moyenne de 0,3 à 1,0 mm,
e) à concurrence de 4 à 10% en poids, un liant à base de polymères qui présentent en soi un module d'élasticité de 90 à 140 MPa et un allongement à la rupture de 400 à 800%, et
f) des fibres organiques ou inorganiques dans des quantités allant jusqu'à 3% en poids.

2. Panneaux composites selon la revendication 1, caractérisés en ce que le mélange de partie centrale contient:
a) à concurrence de 40 à 55% en poids, de l'hydroxyde d'aluminium sous forme comprimée possédant une granulométrie moyenne de 0,3 à 1,0 mm,
b) à concurrence de 20 à 25% en poids, des matières de charge légères possédant un diamètre moyen de 5 à 1500 µm,
c) à concurrence de 12 à 20% en poids, de l'hydroxyde d'aluminium à grains fins ou en éclats possédant une granulométrie moyenne de 10 à 30 µm,
d) à concurrence de 0 à 20% en poids, de l'hydroxyde de magnésium possédant une granulométrie moyenne de 10 à 50 µm, et
e) à concurrence de 6 à 10% en poids, un liant à base de polymères qui présentent en soi un module d'élasticité de 90 à 140 MPa et un allongement à la rupture de 400 à 800%.

3. Panneaux composites selon la revendication 1, caractérisés en ce que le mélange de partie centrale contient:
a) à concurrence de 35 à 55% en poids, de l'hydroxyde d'aluminium sous forme comprimée possédant une granulométrie moyenne de 0,3 à 1,0 mm,
b) à concurrence de 20 à 25% en poids, une matière de charge légère possédant un diamètre moyen de 100 à 300 µm,
c) à concurrence de 14 à 17% en poids, de l'hydroxyde d'aluminium à grains fins ou en éclats possédant une granulométrie moyenne de 10 à 30 µm,
d) à concurrence de 14 à 16% en poids, de l'hydroxyde de magnésium possédant une granulométrie moyenne de 10 à 50 µm, et
e) à concurrence de 7 à 9% en poids, un liant à base de polymères qui présentent en soi un module d'élasticité de 90 à 140 MPa et un allongement à la rupture de 400 à 800%.

4. Panneaux composites selon la revendication 1, caractérisés en ce que le mélange de partie centrale contient, à titre de matière de charge légère, des billes creuses en verre.

5. Panneaux composites selon la revendication 1, caractérisés en ce que le mélange de partie centrale contient, jusqu'à concurrence de 0,5% en poids rapporté au mélange de partie centrale, des agents réduisant les émissions de fumées.

6. Panneaux composites selon la revendication 1, caractérisés en ce que le mélange de partie centrale contient, à titre de liant, un liant possédant une teneur en polyéthylène de 6 à 10% en poids.

7. Panneaux composites selon la revendication 1, caractérisés en ce que le mélange de partie centrale contient, à concurrence de 12 à 20% en poids, de l'hydroxyde d'aluminium à grains fins ou en éclats, possédant une granulométrie moyenne de 10 à 30 µm.

8. Utilisation des panneaux composites selon la revendication 1 à titre de matériaux de construction flexibles, de pavements flexibles pour façades, de parements flexibles pour des bâtiments de grande hauteur, de parois de séparation flexibles dans des bâtiments, dans la construction automobile et dans la construction navale et dans la construction d'appareils et de machines.

9. Procédé pour la fabrication de panneaux composites flexibles selon la revendication 1, comprenant deux couches de recouvrement et une partie centrale, la partie centrale présentant un mélange de partie centrale qui contient un mélange d'une matière de charge avec de l'hydroxyde d'aluminium et d'un liant organique à base de polymères, caractérisé en ce qu'on prépare le mélange de partie centrale par mélangeage des constituants individuels, en utilisant un liant à base de polymères qui présentent en soi un module d'élasticité de 90 à 140 MPa et un allongement à la rupture de 400 à 800%, de préférence à base d'une polyoléfine, qui possède une granulométrie moyenne de 10 à 30 µm.
